# FASCICULE DE BREVET EUROPEEN

(11) **EP 2 628 590 B1**
(45) Date de publication et mention de la délivrance du brevet: **07.10.2015**
(21) Numéro de dépôt: 13154348.0
(22) Date de dépôt: 07.02.2013
(51) Int. Cl.: B29C 70/88, B64C 1/06

(54) **Procédé et dispositif de protection de raidisseurs, ainsi que panneau composite correspondant**
Verfahren und Vorrichtung zum Schutz von Versteifungsrippen sowie Paneel aus Verbundwerkstoff mit derartig ausgeführten Versteifungsrippen
Method and device for protecting stiffeners and composite panel comprising stiffeners having said protection

(30) Priorité: 17.02.2012 FR 1251462
(43) Date de publication de la demande: 21.08.2013
(73) Titulaire: Airbus Opérations SAS, 31060 Toulouse (FR)
(72) Inventeur: Fournie, Ludovic, 31300 TOULOUSE (FR); Blot, Philippe, 44000 NANTES (FR); Belleil, Cédric, 31860 LABARTHE SUR LEZE (FR); Lesourne, Hervé, 44100 NANTES (FR); Laborie, Jean-Michel, 31300 Toulouse (FR)
(74) Mandataire: Gevers France

(56) Documents cités:
- FR-A1- 2 902 689
- US-A1- 2008 308 669

## Description

### DOMAINE TECHNIQUE

L'invention se rapporte à un procédé de protection de raidisseurs de panneau composite et à un dispositif apte à mettre en oeuvre ce procédé. Elle concerne également un panneau en matériau composite comportant des raidisseurs protégés par ledit dispositif contre les chocs pouvant impacter leurs chants.

Le domaine de l'invention est la protection des chants de structures en matériau composite composées d'une superposition de plis de résine époxy renforcée par des fibres d'orientations différentes, en particulier de panneaux auto-raidis par des extensions formant des raidisseurs.

Les structures aéronautiques utilisent ce type de panneaux par exemple dans un caisson de voilure ou de poutre ventrale. Ces panneaux, fortement chargés en compression, sont généralement dimensionnés en stabilité, en compression trouée habitée et en tolérance aux dommages.

La tolérance aux dommages est particulièrement pénalisante pour ce type de panneaux peu tolérants aux dommages lorsque impactés sur leur chant. En effet, leur structure à plis de fibres de carbone superposés débouchant sur chant est hautement fragilisée par un impact sur ce chant. Le choc de l'impact induit en fait une « décohésion » (c'est-à-dire un délaminage) des plis par l'exercice d'efforts hors plan.

Le domaine de l'invention est donc précisément la protection des chants de panneaux auto-raidis.

### ETAT DE LA TECHNIQUE

Afin de pallier cette fragilité et ce manque de tolérance aux dommages, les panneaux sont protégés par des structures de couvre-chant solidarisées. Un couvre-chant de ce type est par exemple connu du document de brevet FR 2 902 689 ou FR 2 869 871.

De tels couvre-chants ont une efficacité limitée car ils présentent une structure globalement en forme de « U » qui ne permet pas une bonne absorption de l'énergie d'impact. Cette énergie est en fait transmise à la structure ou au panneau, la forme ne présentant pas de caractère réellement amortissant. Cette transmission peut être dommageable pour le panneau et ses liaisons à d'autres pièces.

Par ailleurs, ces couvre-chants, entièrement collés au raidisseur, ne sont pas démontables. Pour les retirer, l'assemblage doit être détruit ce qui entraîne la propre destruction de la protection. La structure à protéger n'est donc pas facilement contrôlable après impact.

### EXPOSÉ DE L'INVENTION

L'invention vise à diminuer l'influence du critère de tolérance aux dommages en prévoyant de protéger le raidisseur par un profilé qui présente une configuration absorbant les impacts sur chant, sans propagation de l'énergie d'impact à la structure protégée.

Plus précisément, l'invention a pour objet un procédé de protection de raidisseurs de panneau composite. Ce procédé consiste à coupler un profilé à chaque raidisseur à protéger, les raidisseurs comportant chacun un chant et des flancs latéraux. Le profilé a une section dite supérieure, s'étendant à distance du chant, et configurée sous forme d'enveloppe apte à absorber les impacts sur chant par déformation plastique, une section dite inférieure d'encadrement des flancs latéraux et une section intermédiaire en appui au moins partiel sur le chant de sorte à minimiser la propagation des efforts d'impact à la section inférieure. Le procédé consiste ensuite à coupler la section inférieure d'encadrement des flancs latéraux de manière démontable par détachement d'éléments de fixation sans déformation du profilé.

Selon des modes de réalisation particuliers :
- les sections supérieures, intermédiaires et inférieures sont liées entre elles de manière à former un profilé continu d'épaisseur sensiblement constante ;
- la section supérieure possède un encombrement latéral restreint, de préférence inférieur ou égal à la distance entre les flancs latéraux.

La présente invention a également pour objet un dispositif de protection de raidisseurs de panneau composite à raidisseurs parallèles comportant, chacun, une face frontale multi-plis venant sur chant et s'étendant entre deux flancs latéraux de plis extrêmes, symétriquement par rapport à un plan médian. Le dispositif de protection comporte un profilé symétrique par rapport à ce plan médian et qui vient coiffer le raidisseur. Ce profilé se compose d'une section dite supérieure formée au-dessus du chant, et configurée pour envelopper un espace au-dessus du chant, d'une section dite inférieure d'encadrement des flancs latéraux par des parois longitudinales solidarisées à ces flancs, et d'une section intermédiaire en appui au moins partiel sur le chant par des parois transversales, de sorte à minimiser la propagation des efforts d'impact à la section inférieure.

Selon des caractéristiques préférées :
- la section supérieure présente en coupe une configuration choisie entre un rectangle, une forme oblongue, un double lobe et une forme en « T » à simple ou double pied ;
- la configuration géométrique en forme de double lobe réalise, symétriquement par rapport au plan médian, une transition avec les appuis de la section intermédiaire ;
- les parois inférieures d'encadrement de la section inférieure de chaque profilé sont solidarisées aux flancs latéraux de chaque raidisseur par un moyen de serrage, en particulier :
   ∘ une platine circulaire comportant une interface de fixation auxdits flancs par collage ; l'interface de fixation est formée par des couples tiges/écrous, chaque tige filetée venant de la platine et traversant la section inférieure par des encoches réalisées à intervalle régulier en bordure de cette paroi ;
   ∘ une agrafe venant crocheter le flanc du profilé, notamment par l'intermédiaire d'une gouttière formée par un épaulement ou une saillie ;
   ∘ un serrage élastique (ou pincement) sur les flancs du raidisseur, le matériau et la conformation du profilé pouvant avantageusement permettre un maintien par retour élastique des parois latérales du profilé ;
- les parois inférieures d'encadrement de la section inférieure de chaque profilé présentent des projections latérales, notamment en forme de gouttière, s'étendant longitudinalement et servant de support d'accrochage d'éléments collés aux flancs de chaque raidisseur pour solidariser lesdites parois inférieures ;
- les parois inférieures d'encadrement de la section inférieure d'un profilé présente au moins une encoche qui est comblée par un mastic ;
- le matériau du profilé est choisi parmi des alliages à base d'aluminium, des alliages à base de titane, ou d'un composite aramide-époxy.

### BRÈVE DESCRIPTION DES FIGURES

D'autres données, caractéristiques et avantages de la présente invention apparaîtront à la lecture d'un exemple de réalisation ci-après décrit, en référence aux figures annexées qui représentent, respectivement :
- les figures 1a et 1b, des vues partielles en perspective d'un exemple de profilé en alliage à base de titane à section supérieure en double lobe, respectivement rectangulaire, monté sur les flancs de chaque raidisseur par collage de platines ;
- les figures 2a et 2b, des vues partielles en coupe et en perspective d'un exemple de profilé en aramide-époxy monté sur un raidisseur de panneau et présentant des épaulements pour accrocher des agrafes (encore dénommées patchs) ;
- les figures 3a et 3b, des vues partielles en coupe et en perspective d'un profilé en alliage à base d'aluminium en forme de « T » monté sur raidisseur et présentant des saillies pour accrocher des agrafes de montage sur les flancs du raidisseur ; et
- les figures 4a et 4b, des vues partielles en coupe et en perspective d'un exemple de profilé en aramide-époxy monté sur un raidisseur de panneau et présentant des épaulements, en forme de gouttières, pour accrocher des agrafes.

### DESCRIPTION DÉTAILLÉE

Dans la description détaillée qui suit, les qualificatifs « supérieur » et « inférieur » se rapportent, respectivement, à l'espace situé au-dessus du chant de chaque raidisseur et aux espaces situés au niveau des flancs latéraux de chaque raidisseur. En outre, le terme « latéral » qualifie toute extension dans un plan parallèle aux plis des raidisseurs et le terme « transversal » toute extension dans un plan perpendiculaire à ces plis. Par ailleurs, le terme « externe » s'oppose au terme « interne » par son plus grand éloignement au plan médian Pm. De plus, des signes de référence identiques sur les figures renvoient aux mêmes éléments définis en référence aux passages qui les décrivent.

La description détaillée se rapporte plus précisément à des exemples de réalisation de protections de raidisseurs d'un panneau composite comportant une multitude de raidisseurs. Un tel panneau est formé de manière connue à partir de préformes de section en « U » réalisées par empilement de plis de résine époxy renforcée de fibres de carbone afin de former les raidisseurs.

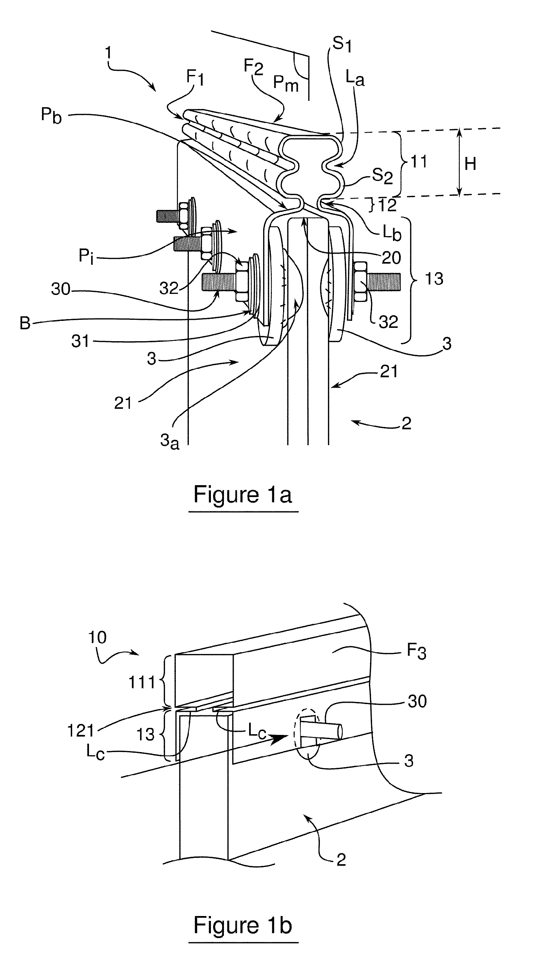

En référence à la figure 1a, la vue en perspective illustre un premier exemple de profilé 1 en alliage à base de titane, mis en forme sous presse hydraulique. La section supérieure 11 de ce profilé présente deux parois latérales supérieures F1 à double lobe « rentrant » La et Lb, formées symétriquement par rapport au plan médian Pm du raidisseur 2, et une paroi supérieure sensiblement plane F2 parallèle au chant 20 de ce raidisseur 2. Les sommets S1 et S2 des lobes rentrants viennent au plus près du plan médian Pm.

Les lobes Lb présentent des parois transversales Pb qui viennent en appui sur le chant 20 pour former la section intermédiaire 12 du profilé 1. Ces parois Pb se prolongent par des parois inférieures Pi d'encadrement, s'étendant respectivement le long des flancs latéraux 21 des plis d'extrémité du raidisseur 2. Les parois inférieures Pi forment la section inférieure 13 du profilé 1. Ces parois Pi sont solidarisées aux flancs 21 par des platines circulaires 3 introduites entre les parois inférieures Pi et les flancs 21. Plus précisément, les platines 3 sont équipées de tiges filetées 30 montées centralement et perpendiculairement au plan des platines 3. Les tiges 30 traversent les parois Pi via des encoches 31 formées sur la bordure longitudinale d'extrémité B de ces parois. Les faces internes 3a des platines 3 sont alors collées par de la résine époxy aux flancs 21, et les tiges 30 sont fixées contre les parois Pi par des écrous 32 serrés sur la face externe des flancs latéraux 21.

Les encoches 31 sont réalisées régulièrement le long des bordures B des parois Pi, par exemple tous les 100 mm. Le profilé en alliage de titane a une épaisseur sensiblement égale à 0.5mm et la section supérieure 11 a une hauteur H sensiblement égale à 20mm. Dans ces conditions, une déformation de la section supérieure 11 créée par un impact sur la face supérieure F2 vient en appui sur le chant 20 via la section intermédiaire 12, ce qui permet de limiter la sollicitation en cisaillement des parois inférieures Pi fixées contre les flancs 21. L'effort d'impact est alors réparti sur le chant : la contrainte et les efforts hors des plans d'empilement sont ainsi limités et un endommagement de la structure est évité.

De plus, le profilé 1 est aisément démontable par desserrage des écrous 32. Alternativement, des attaches à ressort de type « ancre » peuvent être utilisées pour réaliser une fixation réversible du profilé sur les flancs 21 du raidisseur 2.

En outre, lors d'un impact sur la paroi supérieure F2, la forme enveloppante de la section supérieure 11 permet la dissipation de l'énergie d'impact par déformation plastique. Par exemple, la forme en double lobe de la figure 1a permet une absorption de 50 Joules fournie par l'impact d'un objet métallique hémisphérique, sans endommager le raidisseur.

Alternativement, la figure 1b illustre un profilé 10 de raidisseur 2 qui présente une section supérieure 111 de forme rectangulaire en section, sans lobe. Les parois latérales supérieures F3 de cette section 111 sont donc planes mais se prolongent transversalement par des pliures rentrantes Lc pour former une section intermédiaire 121 en appui sur le chant 20. La section inférieure 13 reprend celle du profilé de la figure 1a.

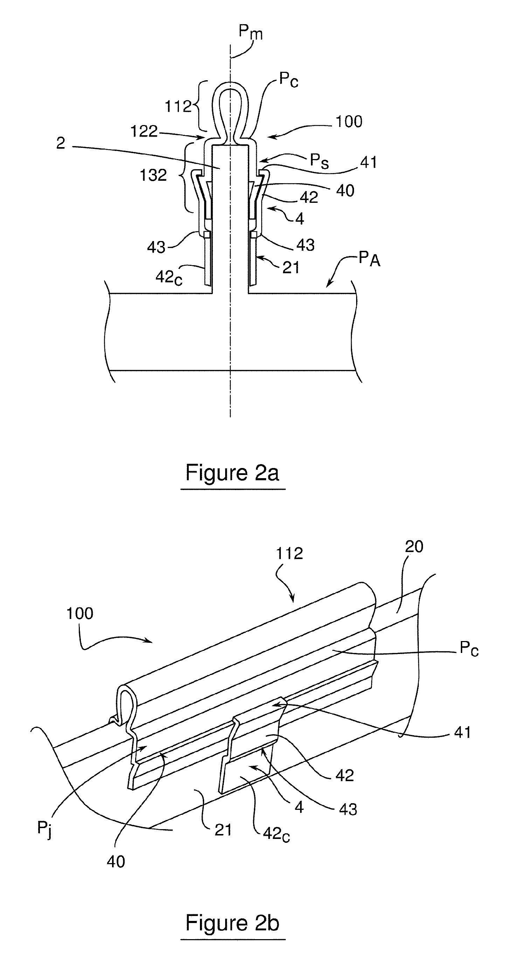

Les figures 2a et 2b illustrent les vues en coupe et en perspective d'un deuxième exemple de profilé 100 en aramide et résine époxy, d'épaisseur sensiblement égale à 1.6mm. La réalisation se fait par moulage en moule et contre-moule métalliques avec la présence d'un noyau métallique.

La section supérieure 112 du profilé 100 peut présenter en coupe une forme de type circulaire ou circulaire déformée. Avantageusement, elle présente en coupe une forme oblongue de type elliptique comme illustré, avec une extension plus importante le long du plan médian Pm que transversalement, de manière à favoriser la tenue aux chocs. Pour la section intermédiaire 122, le profilé 100 se compose de parois d'appui transversales Pc en forme de lobe, du type des parois Pb décrites ci-dessus avec une ouverture plus large du fait de la forme oblongue de la section supérieure 112.

Pour les besoins d'accrochage réversible aux flancs 21 du raidisseur 2, les parois latérales inférieures d'encadrement Pj de la section inférieure 132 comportent des épaulements 40 aptes à servir de support à des agrafes 4. Ces agrafes 4 possèdent des rebords 41 d'appui sur les épaulements 40 ainsi que des parois longitudinales 42. Ces parois 42 se terminent en formant, par un décrochement 43, une face de contact 42c aux flancs 21 du raidisseur 2 du panneau P_{A}. Ces faces de contact 42c sont alors collées aux flancs 21 également à l'aide d'une résine époxy. Les épaulements 40 ont un profil en saillie afin de faciliter le décrochage et donc le démontage du profilé.

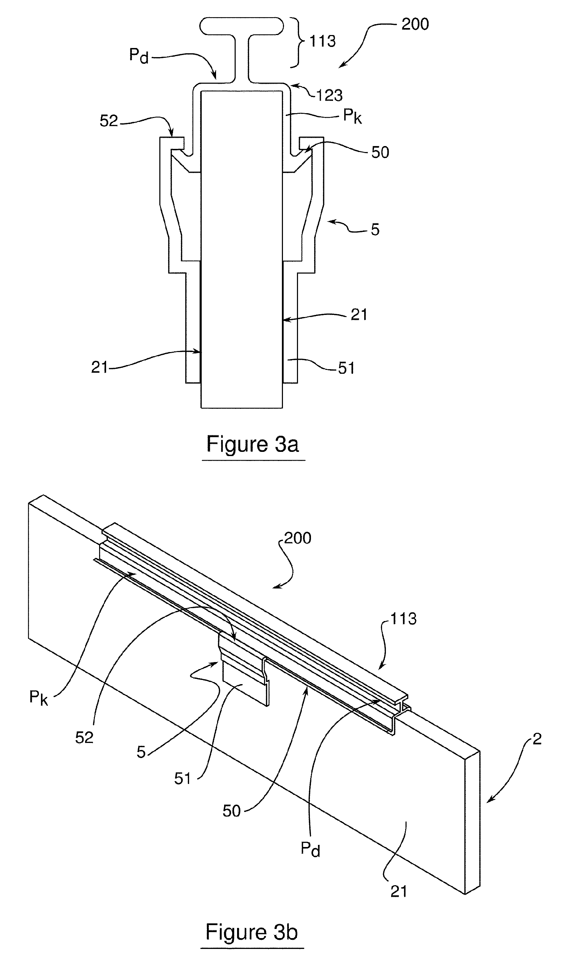

Selon un exemple non revendiqué, illustré sur les figures 3a et 3b par des vues en coupe et en perspective, un profilé 200 est réalisé en alliage à base d'aluminium extrudé. Le profilé 200, d'épaisseur sensiblement égale à 1.5mm, présente une forme en « T » pour la section supérieure 113. Cette forme se prolonge par une paroi transversale Pd d'appui sur tout le chant 20 du raidisseur 2 pour former une section intermédiaire 123. Cette paroi d'appui transversale Pd se prolonge perpendiculairement par des parois latérales inférieures d'encadrement Pk qui viennent contre les flancs latéraux 21 du raidisseur 2.

Ces parois inférieures Pk possèdent chacune une saillie longitudinale 50 qui sert de zone d'accrochage à des agrafes 5 disposées le long des parois Pk. Ces patchs présentent une paroi 51 collée sur le flanc 21 et un crochet 52 venant se clipser sur chaque saillie 50. Les patchs sont réalisés par injection plastique.

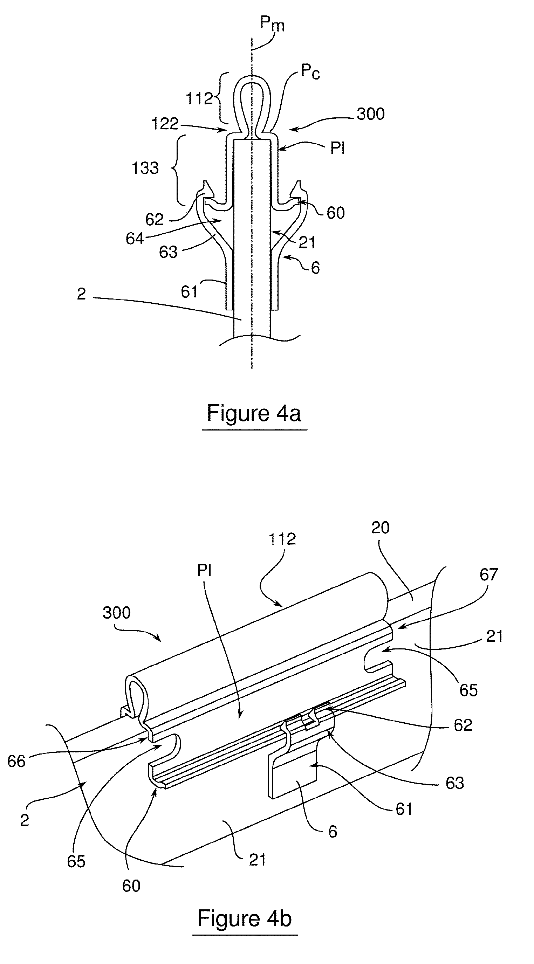

Les figures 4a et 4b illustrent les vues en coupe et en perspective d'un exemple de profilé 300 en aramide et résine époxy, représentant une variante du profilé 100 des figures 2a et 2b, dont la section supérieure 112 et la section intermédiaire 122 correspondent à celles de la figure 2a. Dans cet exemple, pour les besoins d'accrochage réversible aux flancs 21 du raidisseur 2, les parois latérales inférieures Pl de la section inférieure 133 de ce profilé 300 comportent des saillies 60 en formes de gouttières, qui servent d'accrochage à des agrafes 6 disposées le long des parois Pl. Ces agrafes 6 présentent une paroi 61 collée sur le flanc 21 et un crochet 62 de forme adaptée à la saillie 60 en forme de gouttière. Ces caractéristiques permettent d'améliorer la tenue et la résistance de l'ensemble raidisseur 2, profilé 300 et agrafe 6.

De plus, les agrafes 6 comprennent entre la paroi 61 et le crochet 62 une partie intermédiaire 63 qui s'écarte du flanc 21 correspondant de manière à former un espace 64 entre l'agrafe 6 et le flanc 21. Cet espace 64 autorise un déplacement de la section inférieure 133 du profilé 300 vers la partie inférieure sans agir sur l'agrafe 6, ce qui permet d'éviter un décollement de l'agrafe 6 en cas d'impact sur la face supérieure du profilé 300.

Par ailleurs, des encoches 65 sont pratiquées sur les parois latérales inférieures Pl du profilé 300. Ces encoches 65 qui peuvent notamment être pratiquées aux extrémités longitudinales 66, 67 des parois latérales Pl sont comblées par du mastic (non représenté), ce qui permet de renforcer l'adhérence du profilé 300 sur les flancs 21 du raidisseur 2.

L'invention n'est pas limitée aux exemples décrits et représentés. Par exemple le matériau utilisé pour le profilé peut être constitué d'un autre alliage de métal (par exemple à base de nickel) ou d'un autre composite (à base de fibre de verre, hybride verre-aramide ou carbone-aramide). Les moyens d'accrochage des parois latérales des profilés pour les patchs ou agrafes peuvent être constitués de plusieurs saillies ou projection par paroi, et peuvent être formés de moulage sensiblement vers le milieu de la paroi ou à son extrémité.

## Revendications

1. Procédé de protection de raidisseurs de panneau composite (P_{A}), **caractérisé en ce qu'**il consiste à coupler un profilé (1, 10, 100, 300) à chaque raidisseur (2) à protéger comportant un chant (20) et des flancs latéraux (21), le profilé ayant une section dite supérieure (11,111,112) s'étendant à distance du chant (20) et configurée sous forme d'enveloppe apte à absorber les impacts sur chant (20) par déformation plastique, une section dite inférieure (13, 132, 133) d'encadrement des flancs latéraux et une section intermédiaire (12, 121, 122) en appui au moins partiel sur le chant (20) de sorte à minimiser la propagation des efforts d'impact à la section inférieure (13, 132, 133), et ensuite à coupler la section inférieure (13, 132) d'encadrement des flancs latéraux (21) de manière démontable par détachement d'éléments de fixation (3, 4, 5) sans déformation du profilé (1, 10, 100).

2. Procédé de protection selon la revendication précédente, dans lequel les sections supérieures (11, 111, 112, 113), intermédiaires (12, 121, 122) et inférieures (13, 132, 133) sont liées entre elles de manière à former un profilé continu (1, 10, 100, 200, 300) d'épaisseur sensiblement constante.

3. Procédé de protection selon l'une des revendications 1 ou 2, dans lequel la section supérieure (11, 111, 112, 113) possède un encombrement latéral inférieur ou égal à la distance entre les flancs latéraux (21).

4. Dispositif de protection de raidisseurs de panneau composite (P_{A}) à raidisseurs parallèles (2) comportant, chacun, un chant et des flancs latéraux, **caractérisé en ce qu'**il comporte un profilé (1, 10, 100, 300) symétrique par rapport à un plan médian (Pm) et configuré pour venir coiffer le raidisseur (2), ce profilé se composant d'une section dite supérieure (11,111,112) configurée pour envelopper un espace au-dessus du chant (20), d'une section dite inférieure (13, 132, 133) configurée pour encadrer les flancs latéraux (21) par des parois longitudinales (Pi, Pj, Pk, Pl) destinées à être solidarisées à ces flancs (21), et d'une section intermédiaire (12, 121, 122) configurée pour être en appui au moins partiel sur le chant (20) par des parois transversales (Pb, Pc, Pd) de sorte à minimiser la propagation des efforts d'impact à la section inférieure (13, 132).

5. Dispositif de protection selon la revendication précédente, dans lequel la section supérieure (11,111, 112) présente en coupe une configuration choisie entre un rectangle (111), une forme oblongue (112), une forme en lobes (11), en particulier en double lobe (La, Lb), et une forme en «T» à double pied.

6. Dispositif de protection selon l'une des revendications 4 et 5, dans lequel les parois inférieures (Pj, Pk, Pl) d'encadrement de la section inférieure de chaque profilé (100,300) présentent des projections latérales (40, 50, 60) s'étendant longitudinalement et destinées à servir de support d'accrochage d'éléments (4, 5, 6) collés aux flancs (21) de chaque raidisseur (2) pour solidariser lesdites parois inférieures (Pj, Pk, PI).

7. Dispositif de protection selon l'une des revendications 4 à 6, dans lequel les parois inférieures (PI) d'encadrement de la section inférieure d'un profilé (300) présentent au moins une encoche (65) qui est comblée par un mastic.

8. Dispositif de protection selon l'une des revendications 4 à 7, dans lequel le matériau du profilé est choisi parmi des alliages à base d'aluminium, des alliages à base de titane ou d'aramide epoxy.

9. Panneau en matériau composite (P_{A}) comportant des raidisseurs protégés par un dispositif selon l'une des revendications 4 à 8.

10. Panneau en matériau composite selon la revendication 9, dans lequel les parois inférieures d'encadrement (Pi) de la section inférieure (13) de chaque profilé (1) sont solidarisées aux flancs latéraux (21) de chaque raidisseur (2) par des moyens de serrage.

11. Panneau en matériau composite selon la revendication précédente, dans lequel les moyens de serrage sont choisis entre une platine circulaire (3) comportant une interface de fixation (30,32) auxdits flancs (21) par collage, une agraphe (4, 5, 6) venant crocheter le flanc (Pj, Pk, Pl) du profilé, et un serrage élastique sur le flanc (Pj, Pk, Pl).

12. Panneau en matériau composite selon la revendication précédente, dans lequel l'interface de fixation est formée par des couples tiges/écrous (30, 32), chaque tige filetée (30) venant de la platine (3) et traversant la paroi inférieure (Pi) par des encoches (31) réalisées à intervalle régulier en bordure (B) de cette paroi (Pi).

## Patentansprüche

1. Schutzverfahren von Versteifern einer Verbundwerkstoffplatte (P_{A}), **dadurch gekennzeichnet, dass** es darin besteht, ein Profil (1, 10, 100, 300) mit jedem zu schützenden Versteifer (2) zu kuppeln, der eine Kante (20) und Seitenflanken (21) umfasst, wobei das Profil eine sogenannte obere Sektion (11, 111, 112) hat, die sich von der Kante (20) entfernt erstreckt, und in Mantelform konfiguriert ist, die geeignet ist, um Stöße auf der Kante (20) durch plastische Verformung zu absorbieren, eine sogenannte untere Sektion (13, 132, 133) zum Umrahmen der Seitenflanken, und eine Zwischensektion (12, 121, 122) in mindestens teilweiser Auflage auf der Kante (20) derart, dass die Ausbreitung der Aufprallkräfte auf die Zwischensektion (13, 132, 133) minimiert wird, und anschließend die Zwischensektion (13, 132) zum Umrahmen der Seitenflanken (21) auf durch Lösen von Befestigungselementen (3, 4, 5) abnehmbare Art ohne Verformung des Profils (1, 10, 100) zu kuppeln.

2. Schutzverfahren nach dem vorhergehenden Anspruch, wobei die oberen Sektionen (11, 111, 112, 113), Zwischensektionen (12, 121, 112) und unteren Sektionen (13, 132, 133) untereinander derart verbunden sind, dass sie ein durchgehendes Profil (1, 10, 100, 200, 300) mit im Wesentlichen konstanter Stärke bilden.

3. Schutzverfahren nach einem der Ansprüche 1 oder 2, wobei die obere Sektion (11, 111, 112, 113) einen seitlichen Platzbedarf kleiner oder gleich der Entfernung zwischen den Seitenflanken (21) besitzt.

4. Schutzvorrichtung von Versteifern einer Verbundwerkstoffplatte (P_{A}) mit parallelen Versteifern (2), die jeweils eine Kante und Seitenflanken umfassen, **dadurch gekennzeichnet, dass** es ein Profil (1, 10, 100, 300) umfasst, das in Bezug auf eine Mittenebene (Pm) symmetrisch und konfiguriert ist, um auf dem Versteifer (2) zu sitzen, wobei dieses Profil aus einer obere genannten Sektion (11, 111, 112) besteht, die ausgelegt ist, um einen Raum oberhalb der Kante (20) einzuschließen, aus einer sogenannten unteren Sektion (13, 132, 133), die ausgelegt ist, um die Seitenflanken (21) durch Längswände (Pi, Pj, Pk, Pl) zu umrahmen, die dazu bestimmt sind, fest mit diesen Flanken (21) verbunden zu werden, und aus einem Zwischenabschnitt (12, 121, 122), der ausgelegt ist, um mindestens teilweise auf der Kante (20) durch Querwände (Pb, Pc, Pd) derart aufzuliegen, dass die Ausbreitung der Aufprallkräfte auf die untere Sektion (13, 132) minimiert wird.

5. Schutzvorrichtung nach dem vorhergehenden Anspruch, wobei die obere Sektion (11, 111, 112) im Schnitt eine Konfiguration aufweist, die aus einem Rechteck (111), einer länglichen Form (112), einer Lappenform (11), insbesondere als Doppellappen (La, Lb) und einer "T"-Form mit Doppelfuß ausgewählt ist.

6. Vorrichtung nach einem der Ansprüche 4 und 5, wobei die unteren Wände (Pj, Pk, Pl) zum Umrahmen der unteren Sektion des Profils (100, 300) seitliche Vorsprünge (40, 50, 60) aufweisen, die sich längs erstrecken und zu bestimmen sind, als Anhängträger von Elementen (4, 5, 6) zu dienen, die an die Flanken (21) jedes Versteifers (2) geklebt werden, um die unteren Wände (Pj, Pk, Pl) zu verstärken.

7. Schutzvorrichtung nach einem der Ansprüche 4 bis 6, wobei die unteren Wände (Pl) zum Einrahmen der unteren Sektion eines Profils (300) mindestens eine Kerbe (65) aufweisen, die mit einem Kitt gefüllt ist.

8. Schutzvorrichtung nach einem der Ansprüche 4 bis 7, wobei der Werkstoff des Profils aus Legierungen auf Aluminiumsbasis, Legierungen auf Titanbasis oder Aramidepoxid ausgewählt ist.

9. Verbundwerkstoffplatte (P_{A}), die Versteifer umfasst, die durch eine Vorrichtung nach einem der Ansprüche 4 bis 8 geschützt sind.

10. Verbundwerkstoffplatte nach Anspruch 9, wobei die unteren Wände (Pi) zum Umrahmen der unteren Sektion (13) jedes Profils (1) fest mit den Seitenflanken (21) jedes Versteifers (2) durch Spannmittel verbunden sind.

11. Verbundwerkstoffplatte nach dem vorhergehenden Anspruch, wobei die Spannmittel ausgewählt sind aus einer kreisförmigen Platte (3), die eine Befestigungsschnittstelle (30, 32) an den Flanken (21) durch Kleben umfasst, einer Klammer (4, 5, 6), die sich in die Flanke (Pj, Pk, Pl) einhakt, und einem elastischen Spannen auf der Flanke (Pj, Pk, Pl).

12. Verbundwerkstoffplatte nach dem vorhergehenden Anspruch, wobei die Befestigungsschnittstelle aus Paaren aus Schäften/Muttern (30, 32) gebildet ist, wobei jeder Gewindestift (30) von der Platte (3) kommt und die untere Wand (Pi) durch Kerben (31), die in regelmäßigen Abständen am Rand (B) dieser Wand (Pi) angeordnet sind, hergestellt sind.

## Claims

1. A method of protecting stiffeners of composite panels (P_{A}), **characterized in that** it consists in coupling a structural section (1, 10, 100, 300) to each stiffener (2) to be protected including an edge (20) and lateral flanks (21), the structural section having an upper section (11, 111, 112) extending at a distance from the edge (20) and configured in the form of an envelope adapted to absorb impacts on the edge (20) by plastic deformation, a so-called lower section (13, 132, 133) framing the lateral flanks and an intermediate section (12, 121, 122) bearing at least partially on the edge (20) so as to minimize the propagation of impact forces to the lower section (13, 132, 133) and thereafter to couple the lower section (13, 132) framing the lateral flanks (21) demountably by detachment of fixing elements (3, 4, 5) without deformation of the structural section (1, 10, 100).

2. The protection method as claimed in the preceding claim, wherein the upper sections (11, 111, 112, 113), intermediate sections (12, 121, 122) and lower sections (13, 132, 133) are interconnected to form a continuous structural section (1, 10, 100, 200, 300) of substantially constant thickness.

3. The protection method as claimed in one of claims 1 and 2, wherein the upper section (11, 111, 112, 113) has an overall size laterally less than or equal to the distance between the lateral flanks (21).

4. A device for protecting stiffeners of composite panels (P_{A}) with parallel stiffeners (2), each including an edge and lateral flanks, **characterized in that** it includes a structural section (1, 10, 100, 300) symmetrical with respect to a median plane (Pm), and configured to cap the stiffener (2), this structural section consisting of a so-called upper section (11, 111, 112) configured to envelop a space above the edge (20), a so-called lower section (13, 132, 133) configured to frame the lateral flanks (21) with longitudinal walls (Pi, Pj, Pk, Pl) rigidly fastened to these flanks (21), and an intermediate section (12, 121, 122) configured to bear at least partially on the edge (20) via transverse walls (Pb, Pc, Pd) so as to minimize the propagation of impact forces to the lower section (13, 132).

5. The protection device as claimed in the preceding claim, wherein the upper section (11, 111, 112) has in section a configuration chosen from a rectangle (111), an oblong shape (112), a lobed shape (11), in particular a double-lobe shape (La, Lb), and a T-shape (113) with double stem.

6. The protection device as claimed in one of claims 4 and 5, wherein the framing lower walls (Pj, Pk, Pl) of the lower section of each structural section (100, 300) feature lateral projections (40, 50, 60) extending longitudinally and serving to support and attach elements (4, 5, 6) glued to the flanks (21) of each stiffener (2) to fasten together said lower walls (Pj, Pk, Pl).

7. The protection device as claimed in one of claims 4 to 6, wherein the framing lower walls (Pl) of the lower section of a structural section (300) feature at least one notch (65) that is filled with a mastic.

8. The protection device as claimed in one of claims 4 to 7, wherein the material of the structural section is chosen from alloys based on aluminum, alloys based on titanium or epoxy aramide.

9. A composite material panel (P_{A}) including stiffeners protected by a device as claimed in any one of claims 4 to 8.

10. The composite material panel as claimed in claim 9, wherein the framing lower walls (Pi) of the lower section (13) of each structural section (1) are rigidly fastened to the lateral flanks (21) of each stiffener (2) by clamping means.

11. The composite material panel as claimed in the preceding claim, wherein the clamping means are chosen from a circular plate (3) including an interface (30, 32) for sticking it to said flanks (21), a clip (4, 5, 6) that clips onto the flank (Pj, Pk, Pl) of the structural section, and elastic clamping on the flank (Pj, Pk, Pl).

12. The composite material panel as claimed in the preceding claim, wherein the fixing interface is formed by stud/nut pairs (30, 32), each stud (30) coming from the plate (3) and passing through the lower wall (Pi) by means of notches (31) produced at regular intervals in the border (B) of this wall (Pi).
